# EUROPÄISCHE PATENTANMELDUNG

(11) **EP 3 928 926 A1**
(43) Veröffentlichungstag der Anmeldung: **29.12.2021**
(21) Anmeldenummer: 20020424.6
(22) Anmeldetag: 22.09.2020
(51) Int. Cl.: B24C 1/00, B23K 37/00, F25D 3/12, B24C 5/04

(54) **VORRICHTUNG UND VERFAHREN ZUM KÜHLEN VON BAUTEILEN, INSBESONDERE BEIM SCHUTZGASSCHWEISSEN ODER BEIM GENERATIVEN FERTIGEN MITTELS SCHUTZGASSCHWEISSEN, MIT EINEM CO2-PARTIKELSTRAHL**

(30) Priorität: 27.06.2020 DE 102020003866
(71) Anmelder: Linde GmbH, 82049 Pullach (DE)
(72) Erfinder: Ammann, Thomas, 80939 München (DE)
(74) Vertreter: Gellner, Bernd

(57) **Zusammenfassung**

Erfindungsgemäß ist eine Vorrichtung zum Kühlen von Bauteilen mittels eines CO₂-Partikelstrahls vorgesehen. Diese umfasst einen Zuführkanal zum Zuführen von flüssigem CO₂, einen Expansionsabschnitt zum Erzeugen von CO₂-Partikeln aus dem flüssigem CO₂, wobei das CO₂ im Expansionsabschnitt expandiert und dabei zu CO₂-Partikeln und gasförmigem CO₂ umgewandelt wird und einer Düse zum Ausgeben der CO₂-Partikel in einer Strömungsrichtung. Die Vorrichtung zeichnet sich dadurch aus, dass eine Absaugeinrichtung vorgesehen ist, wobei ein Volumenstrom der Absaugeinrichtung ausgebildet ist, um einen Großteil der entstandenen CO₂-Gasphase im Expansionsabschnitt, im Wesentlichen entgegen der Strömungsrichtung der CO₂-Partikel, abzusaugen.

## Beschreibung

Die Erfindung betrifft eine Vorrichtung und ein Verfahren zum Kühlen von Bauteilen, insbesondere beim Schutzgasschweißen oder beim generativen (additiven) Fertigen mittels Schutzgasschweißen, mit einem CO₂-Partikelstrahl.

Bauteile können durch Beschuss mit Trockeneis gekühlt und/oder gereinigt werden. Trockeneis ist in den festen Aggregatzustand überführtes und auf mindestens -78,5 °C gekühltes Kohlendioxid. Unter Atmosphärendruck geht Trockeneis unmittelbar vom festen Aggregatzustand in den gasförmigen über, wobei keine Schmelzflüssigkeit entsteht.

Trockeneis liegt bei der Produktion in Form von Schnee vor. Die Erzeugung von CO₂-Schnee vor Ort mittels einer Düse aus flüssigem CO₂ und die direkte Bestrahlung einer Oberfläche mit diesem Schnee, ggf. mit Unterstützung von Druckluft, ist verfahrenstechnisch vergleichsweise einfach zu handhaben und leicht zu automatisieren.

Aus der EP 1 501 655 B1 geht ein Strahlverfahren und eine Strahlvorrichtung hervor. Bei dieser Vorrichtung wird flüssiges CO2 über eine Zuleitung einem im Querschnitt erweiterten Entspannungsraum zugeführt. Durch die Entspannung wird das flüssige CO2 in Trockenschnee umgewandelt und zusammen mit einem Trägergas unter Druck zu einer Strahldüse zugeführt. Bei dieser Vorrichtung kann vorgesehen sein, feste oder flüssige Strahlmittel über seitliche Zuführungen in die Strahlleitung stromaufwärts oder stromabwärts eines Abzweigs, der vor der Strahldüse angeordnet ist, oder gegebenenfalls auch in einem noch weiter stromabwärts liegenden Entspannungsraum münden zu lassen.

In der DE 10 2017 008 488 B4 ist eine Vorrichtung zum Dosieren von Kohlendioxidschnee offenbart. Diese umfasst einen Vorlagebehälter, in den eine Zuleitung für flüssiges oder schneeförmiges Kohlendioxid, sowie eine Gasabzugsleitung zum Abführen von Kohlendioxidgas einmündet, und der eine bodenseitig angeordnete Ausgabeöffnung aufweist und mit zumindest einem beabstandet von der Ausgabeöffnung angeordneten Trennmesser ausgerüstet ist.

Wire-Arc Additive Manufacturing (WAAM) hat die Grenzen der Schweißtechnik als reinen Fügeprozess um die generative Fertigung erweitert.

Dieser Prozess basiert auf Lichtbogen- sowie Plasma-Lichtbogen-Schweißen und nutzt Drähte als Ausgangswerkstoff. Metall-Schutzgas- (MIG/MAG), WIG- und Plasmaschweißtechniken werden zum Schmelzen der Zusatzwerkstoffe eingesetzt, mit denen 3D-Komponenten lagenweise aufgebaut werden.

Die Vorteile des Additive Manufacturing mit der Lichtbogen- und Plasmaschweißtechnik liegen darin, dass keine komplexen Werkzeuge und Anlagen erforderlich sind, was bedeutet, dass die Investitionskosten gering, die Ergebnisse jedoch absolut überzeugend sind. Auf diese Weise hergestellte Metallobjekte weisen eine hohe strukturelle Integrität und Formgenauigkeit auf. Hinsichtlich Kosteneffizienz übertrifft diese Technologie andere generative Fertigungsprozesse wie Laserstrahlschweißen und Elektronenstrahlschweißen.

Wie beim Standard-MIG/MAG-Schweißen wird Metalldraht zugeführt, der im Lichtbogen schmilzt, um direkt den lagenweisen Aufbau auf dem Substrat zu generieren. Prozesse mit geringerer Wärmezufuhr, die im Kurzlichtbogen arbeiten, werden aufgrund der Wärmeempfindlichkeit der meisten beim Additive Manufacturing eingesetzten Materialien bevorzugt. Schutzgase schützen Schmelze und das heiße Metall vor der Umgebungsluft und damit vor Oxidation.

Um die chemische Reaktion zu verhindern, die stattfindet, wenn das erhitzte Metall mit Elementen wie Sauerstoff und Stickstoff in Kontakt kommt, werden Schutzgase eingesetzt die Elektrode, Schmelzbad und Wärmeeinflusszone vor Reaktionen mit der Umgebungsluft schützen und die Beeinträchtigungen durch die chemische Reaktion verhindern. Durch den Einsatz von Schutzgasen bleiben die metallurgischen Eigenschaften der Komponenten erhalten oder werden in manchen Fällen sogar verbessert.

Erprobte MIG/MAG-Schweißgase tragen zur Verbesserung der mechanischen Eigenschaften bei. Argon, Helium und deren Gemische sind die bevorzugten Prozessgase im Additive Manufacturing mit MIG/MAG- und Plasma-Schweißtechniken. Zur Feinabstimmung der Materialeigenschaften können aktive Komponenten wie CO₂, O₂, N₂ oder H₂ zugesetzt werden.

Zudem werden neuartige Kühlstrategien im Zusammenhang mit dem Additive Manufacturing (generatives Fertigen) getestet, um die Einwirkung großer Hitze in den oberen Schichten des Werkstücks zu verhindern. Es wurden experimentelle Versuche mit Argon, Wasserstoff und Stickstoff durchgeführt, die einen signifikanten Einfluss des Kühlgases auf die Temperatur während des MSG-Prozesses beim Additive Manufacturing belegen. Die besten Ergebnisse wurden mit Stickstoff und Wasserstoff erzielt, die einen effektiven Kühlprozess ermöglichten. Somit können Korngefüge und Korngröße mit Hilfe der Gaszusammensetzung zu einer homogenen Mikrostruktur modelliert werden. Nachteilig dabei ist, dass große Gasmengen nötig sind, die die Schutzatmosphäre am Schweißbrenner stark stören können.

CO₂-Schneestrahldüsen werden zum Kühlen heißer Bauteile, bspw. beim Thermischen Spritzen bzw. in der Schweißtechnik verwendet. Hier existieren bereits CO₂-Kühldüsen, die mit flüssigem CO₂ (LIC) aus einer Tauchrohrflasche gespeist werden, und in deren Düsenausgang das CO₂ expandiert und dabei zu Trockeneis und gasförmigem CO₂ umwandelt. Der Trockeneisschnee wird dann durch das rasch expandierende gasförmige CO₂ stark beschleunigt und durch ein anschließendes Strahlrohr auf das zu kühlende Substrat geschossen. Je nach Ausgestaltung dieser Düsen liegt der optimale Einsatzbereich beim Kühlen oder beim Reinigen der Substratoberfläche.

Aufgabe der vorliegenden Erfindung ist es eine Vorrichtung und ein Verfahren bereitzustellen mit denen ein Schweißprozess, insbesondere beim Schutzgasschweißen oder beim Generativen Fertigen mittels Schutzgasschweißen, verbessert werden kann.

Insbesondere ist es eine Aufgabe der vorliegenden Erfindung, eine effizientere Kühlung beim Schweißen, insbesondere beim Schutzgasschweißen oder beim Generativen Fertigen mittels Schutzgasschweißen, zu ermöglichen, ohne dass die Kühlung einen negativen Einfluss auf den Schweißprozess hat.

Eine oder mehrere diese Aufgaben werden durch die vorliegende Erfindung, wie sie in den unabhängigen Patentansprüchen 1, 8 und 9 definiert ist gelöst. Vorteilhafte Ausgestaltungen sind in den davon abhängigen Unteransprüchen angegeben.

Erfindungsgemäß ist eine Vorrichtung zum Kühlen von Bauteilen mittels eines CO₂-Partikelstrahls vorgesehen. Diese umfasst einen Zuführkanal zum Zuführen von flüssigem CO₂, einen Expansionsabschnitt zum Erzeugen von CO₂-Partikeln aus dem flüssigem CO₂, wobei das CO₂ im Expansionsabschnitt expandiert und dabei zu CO₂-Partikeln und gasförmigem CO₂ umgewandelt wird und einer Düse zum Ausgeben der CO₂-Partikel in einer Strömungsrichtung. Die Vorrichtung zeichnet sich dadurch aus, dass eine Absaugeinrichtung vorgesehen ist, wobei ein Volumenstrom der Absaugeinrichtung ausgebildet ist, um einen Großteil der entstandenen CO₂-Gasphase im Expansionsabschnitt, im Wesentlichen entgegen einer Strömungsrichtung der CO₂-Partikel, abzusaugen.

Unter einer Strömungs- oder Ausgaberichtung wird im Rahmen der vorliegenden Erfindung eine vorbestimmte Richtung verstanden, in der die CO₂-Partikel mittels der Vorrichtung zum Kühlen von Bauteilen mittels eines CO₂-Partikelstrahls ausgegeben werden. Unter dem Ausdruck "im Wesentlichen" wird verstanden, dass eine Absaugrichtung entgegen der Strömungsrichtung der CO₂-Partikel verläuft oder in einem spitzen Winkel kleiner 90° entgegen der Strömungsrichtung der CO₂-Partikel angeordnet ist.

Bei Vorrichtungen, insbesondere Strahldüsen (ohne Druckluftunterstützung), zum Kühlen von Bauteilen mittels eines CO₂-Partikelstrahls beschleunigt die expandierende Gasphase die Trockeneispartikel in einer Ausgaberichtung nach vorne zum Düsenausgang bzw. zum Bauteil bzw. Substrat hin.

Dadurch, dass erfindungsgemäß eine Absaugeinrichtung vorgesehen ist, und ein Volumenstrom der Absaugeinrichtung ausgebildet ist, um einen Großteil der entstandenen CO₂-Gasphase im Expansionsabschnitt abzusaugen, wird die expandierende Gasphase nach hinten entgegen der Ausgaberichtung abgesaugt, bevor sie die CO₂-Partikel nach vorne (zum Düsenausgang bzw. Werkstück) beschleunigen kann.

Die CO₂-Partikel bekommen schon beim Austritt aus einer Düsenkapillare des Zuführkanals zum Zuführen von flüssigem CO₂, einen gewissen Impuls mit, der verhindert, dass die Partikel entgegen der Ausgaberichtung nach hinten abgesaugt werden. Die vorliegende Erfindung kann daher als ein Phasenseparator angesehen werden.

Mittels der vorliegenden Erfindung ist es somit möglich, die Austrittsgeschwindigkeit der CO₂-Partikel an einem Düsenausgang im Vergleich zu herkömmlichen CO2-Strahldüsen erheblich zu verringern.

Dies ermöglicht die Verwendung beim Wire Arc Additive Manufacturing (WAAM) bzw. beim Generativen Fertigen mittels Schutzgasschweißen.

Durch Kühlen mittels der erfindungsgemäßen Vorrichtung wird der Schweißprozess nahezu gar nicht durch unerwünschte Strömung gestört und die Düse zum Ausgeben der CO₂-Partikel kann näher an einen Schweißbrenner heranrücken.

Ziel der vorliegenden Erfindung ist es, die Absaugleistung bzw. den entsprechenden Volumenstrom derart einzustellen, sodass ein Großteil der Gasphase noch in ihrer Entstehung abgesaugt wird, wohingegen die Feststoffpartikel nicht abgesaugt werden sollen. Ein ideal abgestimmter erfindungsgemäßer Prozess saugt nahezu alles Gas auf, bevor es die CO₂-Partikel zusätzlich beschleunigen kann.

Bei einem WAAM-Prozess wird bspw. durch den Lichtbogen sehr viel Wärme zunächst in die Bauplattform (Grundplatte) und sukzessive ins entstehende Werkstück eingebracht. Die dabei entstehende Wärme kann nur durch Wärmeleitung in eine üblicherweise wassergekühlte Bauplattform abfließen. Mit zunehmendem Baufortschritt wächst die Struktur bzw. das Werkstück immer mehr, und die aufgenommene Wärme staut sich im oberen Teil des Werkstücks, noch bevor sie in tiefer gelegene Werkstückschichten und in die Bauplattform abfließen kann. Dieses Problem wird sogar noch größer, wenn schlecht wärmeleitende Werkstoffe verarbeitet werden, wie z.B. nichtrostende Stähle.

Diese aufgestaute Wärme stört zunehmend den Schweißprozess, weil das von einer Brennereinrichtung abgeschmolzene Material immer länger für die Erstarrung braucht. Im Extremfall bricht der Prozess komplett ab, weil die Schmelze unkontrolliert zur Seite abfließt wodurch das Bauteil zumeist beschädigt wird.

Mittels der erfindungsgemäßen Vorrichtung ist eine zusätzliche brennernahe Kühlung möglich.

Die Erfinder der vorliegenden Erfindung haben erkannt, dass zum prozessintegrierten Kühlen eines WAAM-Prozesses herkömmliche CO₂- Düsen jedoch weitgehend ungeeignet sind, da sie durch ihren hohen Gasausstoß und die hohe Ausströmgeschwindigkeit dazu neigen, den notwendigen Gasschutz bzw. die Schutzgasatmosphäre am Schweißbrenner massiv zu stören. Aus diesem Grund müssten diese Düsen weit entfernt vom Schweißbrenner angeordnet werden, was die Verwendbarkeit speziell bei kleineren Werkstücken deutlich einschränkt.

Dadurch, dass erfindungsgemäß eine Absaugeinrichtung vorgesehen ist, wobei ein Volumenstrom der Absaugeinrichtung ausgebildet ist, um einen Großteil der entstandenen CO₂-Gasphase im Expansionsabschnitt abzusaugen ist es möglich die CO₂-Partikel mit einer wesentlich geringeren Austrittsgeschwindigkeit gegenüber herkömmlichen CO₂-Düsen abzugeben.

Unter einem Großteil der Gasphase wird im Rahmen der vorliegenden Erfindung ein Anteil von in etwa 65 Vol.-% bis 98 Vol.-% bzw. in etwa 75 Vol.-% bis 90 Vol.-% und vorzugsweise in etwa 80 Vol.-% des Volumenstroms der entstehenden Gasphase verstanden.

Zudem ist mittels der erfindungsgemäßen Vorrichtung eine höhere Ausbeute von Trockeneis zuungunsten der Gasphase möglich.

Insbesondere bedingt die nun mögliche Kühlung verbessertes Korngefüge und verbesserte Korngröße.

Die Vorrichtung kann eine Düseneinrichtung mit einem Düsenkörper und einer Düse sein, wobei der Düsenkörper in etwa rohrförmig ausgebildet ist und ein in einer Ausgaberichtung vorne liegender Bereich des Düsenkörpers die Düse ausbildet und ein in Ausgaberichtung hinten liegender Bereich mit der Absaugeinrichtung verbunden ist, wobei die Absaugeinrichtung eine Einrichtung zum Erzeugen eines Unterdrucks ist deren Saugleistung vorzugsweise regelbar ist.

Die Düseneinrichtung ist als eine CO₂ Strahldüse ausgebildet, die die CO₂-Partikel in einer Strömungs-/ Ausgaberichtung abgibt.

Die CO₂-Partikel können als Trockeneis, insbesondere als Trockeneispartikel oder als Trockeneisschnee ausgebildet sein.

Der Zuführkanal zum Zuführen von flüssigem CO₂ kann in etwa mittig bzgl. einer umlaufenden Mantelwandung des Düsenkörper angeordnet sein, wobei eine Düse des Zuführkanals in den Expansionsabschnitt mündet.

Dadurch, dass der Zuführkanal in etwa radial gleich beabstandet von der Mantelwandung des Düsenkörpers angeordnet ist, ist eine effiziente Erzeugung von CO₂-Partikeln möglich.

Der Volumenstrom der Absaugeinrichtung kann derart ausgebildet sein, dass ein Großteil der Gasphase in etwa zum Zeitpunkt ihrer Entstehung im Expansionsabschnitt derart abgesaugt wird, dass alles Gas abgesaugt wird, bevor es zur zusätzlichen Beschleunigung der CO₂-Partikel kommt, d.h. der Betrag des Volumenstroms der Absaugeinrichtung ist kleiner oder gleich dem Betrag der entstehenden Gasphase.

Dadurch, dass der Betrag des Volumenstroms der Absaugeinrichtung ist kleiner oder gleich dem Betrag der entstehenden Gasphase ist, ist es möglich die CO₂-Partikel abzugeben, ohne dass sie durch die entstehende Gasphase übermäßig beschleunigt werden.

Weiterhin ist erfindungsgemäß eine Vorrichtung zum Schweißen oder generativen (additiven) Fertigen vorgesehen, die eine Einrichtung zum Schutzgasschweißen, und eine vorstehend aufgezeigte Vorrichtung zum Kühlen von Bauteilen mittels eines CO₂-Partikelstrahls umfasst wobei die Vorrichtung zum Kühlen von Bauteilen mittels eines CO₂-Partikelstrahls eine Führungseinrichtung zum Verfahren aufweist oder wobei die Vorrichtung zum Kühlen von Bauteilen mittels eines CO₂-Partikelstrahls mit der Vorrichtung zum Schweißen derart verbunden ist, dass beide Vorrichtungen synchron verfahrbar sind.

Somit kann die Vorrichtung zum Kühlen von Bauteilen mittels eines CO₂-Partikelstrahls integraler Bestandteil der Vorrichtung zum Schweißen oder generativen Fertigen oder mit dieser direkt gekoppelt oder verbunden sein.

Alternativ kann die Vorrichtung zum Kühlen von Bauteilen mittels eines CO₂-Partikelstrahls eine Führungseinrichtung, wie z.B. eine Robotereinrichtung oder eine Verfahreinrichtung mit Linearführungen aufweisen, um die Vorrichtung zum Kühlen von Bauteilen mittels eines CO₂-Partikelstrahls entsprechend einem Auftrags- bzw. Verfahrweg der Vorrichtung zum Schweißen oder generativen Fertigen zu verfahren.

Die Einrichtung zum Schutzgasschweißen kann als eine Einrichtung zum Gasschmelzschweißen oder zum Lichtbogenschweißen oder zum Laserstrahlschweißen oder als eine Lasereinrichtung oder Lichtbogeneinrichtung zum generativen Fertigen mittels Schutzgas ausgebildet sein.

Insbesondere ist die Vorrichtung zum generativen Fertigen somit zur Verwendung mit einer Vorrichtung zur Direct Energy Deposition (DED) vorgesehen. Ähnlich wie bei einigen PBF-Technologien (Powder Bed Fusion) (wie LPBF oder EBM) verwendet Direct Energy Deposition eine fokussierte Energiequelle, wie beispielsweise einen Laser- (Lasereinrichtung) oder Elektronenstrahl (Elektronenstrahleinrichtung), um das Material zu schmelzen. Das Material wird jedoch gleichzeitig mit der Abscheidung durch eine Düse geschmolzen. Dadurch endet, anders als bspw. beim L-PBF mit Pulver, nahezu das komplette zugeführte Material im Werkstück

Diese Technologie ist auch unter Namen wie Laser Engineered Net Shaping (LENS), Direct Metal Deposition (DMD), Electron Beam Additive Manufacturing (EBAM) oder Wire-Arc Additive Manufacturing (WAAM)etc. bekannt, die in Kombination mit der vorliegenden Erfindung verwendet werden können.

Weiterhin kann eine Kühlung von ein- oder mehrlagigen Schweißnähten beim Verbindungsschweißen vorgesehen sein Ein Abstand zwischen der Schweißeinrichtung und der Düse der Vorrichtung zum Kühlen von Bauteilen mittels eines CO₂-Partikelstrahls kann zwischen 2 cm und 40 cm und vorzugsweise zwischen 2 cm und 20 cm betragen und vorzugsweise etwa 10 cm betragen. Zusätzlich und/oder alternativ kann auch vorgesehen sein, dass die Düse der Vorrichtung zum Kühlen von Bauteilen mittels eines CO₂-Partikelstrahls derart ausgebildet ist, dass sie die Schweißeinrichtung konzentrisch umgibt.

Optional kann an einer Mantelwandung der Düseneinrichtung eine Heizeinrichtung vorgesehen sein, um ein Festkleben von Trockeneispartikeln und damit ein Verstopfen der Düse zu vermeiden. Diese Heizung kann bspw. durch eine elektrische Heizung mit Widerstandsdraht ausgebildet sein.

Die Vorteile eines erfindungsgemäßen Verfahrens entsprechen analog den vorstehend an Hand der Vorrichtung beschrieben Vorteilen,

Gemäß dem Verfahren ist zum Kühlen einer Bauteiloberfläche mittels CO₂-Partikeln, insbesondere mit einer Vorrichtung zum Kühlen von Bauteilen mittels eines CO₂-Partikelstrahls vorgesehen, wobei über einen Zuführkanal flüssiges CO₂ einer Düseneinrichtung zugeführt wird und das CO₂ in einem Expansionsabschnitt der Düseneirichtung expandiert und dabei zu CO₂-Partikeln und gasförmigem CO₂ umgewandelt wird und, wobei ein Volumenstrom einer Absaugeinrichtung derart ausgebildet ist, um einen Großteil der entstandenen Gasphase im Expansionsabschnitt abzusaugen.

Ein Volumenstrom der Absaugeinrichtung entspricht in etwa dem Volumenstrom der Gasphase, sodass die Gasphase in etwa zum Zeitpunkt ihrer Entstehung im Expansionsabschnitt abgesaugt wird, sodass nahezu alles Gas abgesaugt wird, bevor es zur zusätzlichen Beschleunigung der CO₂-Partikel kommt, d.h. der Volumenstroms der Absaugeinrichtung ist kleiner oder gleich dem Volumenstrom der entstehenden Gasphase.

Nach dem Kühlen einer Bauteiloberfläche kann im Bereich der gekühlten Bauteiloberfläche geschweißt oder generativ gefertigt werden und/oder es kann zunächst geschweißt oder generativ gefertigt werden und anschließend gekühlt werden, sodass das Verfahren beim Schweißen oder generativen Fertigen verwendet wird.

Unter einem generativen Fertigen wird im Rahmen der vorliegenden Erfindung das lagen- bzw. schichtweise Aufbauen eines dreidimensionalen Bauteils unter Verwendung eines Zusatzwerkstoffes in Form von Pulver oder Draht verstanden, welches bzw. welcher mittels Laserstrahl oder elektrischem Lichtbogen bzw. Plasmastrahl aufgeschmolzen und auf einer Substratplatte oder der letzten gefertigten Schicht des Bauteils gezielt abgelegt wird. Diese Verfahren werden allgemein unter dem Oberbegriff DED (Directed Energy Deposition) geführt, zur weiteren Unterscheidung sind andere Bezeichnungen wie z.B. LMD (Laser Metal Deposition) oder WAAM (Wire Arc Additive Manufacturing) gebräuchlich.

Die vorliegende Erfindung wird im Folgenden anhand eines in den Figuren dargestellten Ausführungsbeispiels näher beschrieben. Diese Figuren zeigen in:
Figur 1 eine frontale Darstellung einer erfindungsgemäßen Vorrichtung zum Kühlen von Bauteilen,
Figur 2 eine seitlich geschnittene Darstellung aus Figur 1, und

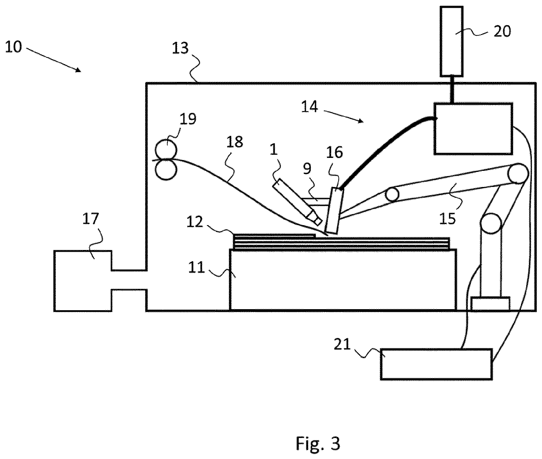

Figur 3 eine erfindungsgemäße Vorrichtung zum Wire Arc Manufacturing.

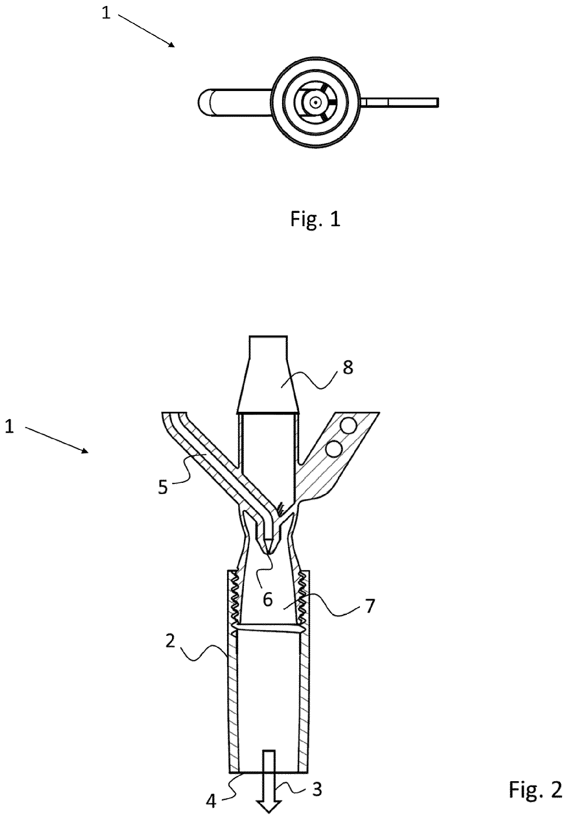

Eine erfindungsgemäße Vorrichtung 1 zum Kühlen von Bauteilen mittels eines CO₂-Partikelstrahls ist eine Düseneinrichtung mit einem Düsenkörper 2 (Figuren 1 und 2).

Der Düsenkörper 2 weist in etwa eine rohrförmige Form auf und ist zum Ausgeben eines CO₂-Partikelstrahls in einer Ausgaberichtung 3 ausgebildet.

Ein in der Ausgaberichtung 3 vorneliegender Bereich des Düsenkörpers 2 beziehungsweise ein Endabschnitt des rohrförmigen Düsenkörpers 2 bildet eine Düse 4 aus. Dieser Abschnitt kann konisch aufweitend oder konisch verjüngend oder in etwa zylindrisch ausgebildet sein.

In etwa mittig im Düsenkörper 2 ist ein Endbereich eines Zuführkanals 5 zum Zuführen von flüssigem CO₂ angeordnet. Dieser Zuführkanal 5 weist an seinem Ende eine Zuführdüse 6 auf, die in Form einer Kapillare und/oder sich konisch verjüngend ausgebildet ist.

Der Zuführkanal 5 zum Zuführen von flüssigem CO₂ ist in etwa mittig bezüglich einer umlaufenden Mantelwandung des Düsenkörpers 2 angeordnet beziehungsweise ist zumindest die Zuführdüse 6 des Zuführkanals 5 radial gleich beabstandet von der Mantelwandung.

Der in Ausgaberichtung 3 an die Zuführdüse 6 angrenzende Bereich des Düsenkörpers 2 wird im Folgenden als Expansionsabschnitt 7 bezeichnet.

Im Expansionsabschnitt 7 expandiert das über den Zuführkanal 5 zugeführte CO₂ und wird dabei in CO₂-Partikel und gasförmiges CO₂ umgewandelt.
Der Zuführkanal 5 zum Zuführen von flüssigem CO₂ ist mit einer entsprechenden CO₂-Quelle (nicht dargestellt) beziehungsweise einer CO₂-Flasche verbunden.

An einem entgegen der Ausgaberichtung 3 liegenden Ende des Düsenkörpers 2 ist eine Absaugeinrichtung 8 angeschlossen.

Die Absaugeinrichtung 8 ist ausgebildet, um einen Großteil der entstandenen CO₂-Gasphase im Expansionsabschnitt 7 abzusaugen.

Die von der Düse 4 abgegebenen CO₂-Partikel sind als Trockeneis, vorzugsweise als Trockeneispartikel oder als Trockeneisschnee ausgebildet.

Die Absaugeinrichtung 8 ist demgemäß eine Einrichtung zum Erzeugen eines Unterdrucks ausgebildet, wobei deren Saugleistung bzw. deren Volumenstrom zum Absaugen mittels einer entsprechenden Steuereinrichtung (nicht dargestellt) steuer- bzw. regelbar ist.

Die Vorrichtung 1 zum Kühlen von Bauteilen mittels eines CO₂-Partikelstrahls ist mit der Vorrichtung zum Schweißen oder generativen Fertigen 10 derart verbunden, dass beide Vorrichtungen 1, 10 synchron verfahrbar sind.

Somit kann die Vorrichtung 1 zum Kühlen von Bauteilen mittels eines CO₂-Partikelstrahls integraler Bestandteil der Vorrichtung zum Schweißen oder generativen Fertigen 10 oder mit dieser direkt gekoppelt oder verbunden sein.

Alternativ kann die Vorrichtung 1 zum Kühlen von Bauteilen mittels eines CO₂-Partikelstrahls eine eigene Führungseinrichtung 9, wie z.B. eine Robotereinrichtung oder eine Verfahreinrichtung mit Linearführungen aufweisen, um die Vorrichtung 1 zum Kühlen von Bauteilen mittels eines CO₂-Partikelstrahls entsprechend einem Auftrags- bzw. Verfahrweg der Vorrichtung zum Schweißen oder generativen Fertigen 10 zu verfahren.

Die erfindungsgemäße Vorrichtung 1 beziehungsweise Strahldüse beziehungsweise Düseneinrichtung ist in vorteilhafterweise mit einer Vorrichtung zum Schweißen oder generativen Fertigen 10 kombinierbar.

Im Folgenden wird eine solche Vorrichtung zum Schweißen oder generativen Fertigen 10 anhand einer Vorrichtung zum Wire Arc Additive Manufacturing (WAAM) beispielhaft beschrieben.

Eine solche Vorrichtung zum Schweißen oder generativen Fertigen 10 umfasst eine Bauplattform 11 beziehungsweise einen Arbeitstisch mit einem entsprechenden Substrat 12.

Die Bauplattform 11 ist ebenso wie die nachfolgenden Bauteile der Vorrichtung zum Schweißen oder generativen Fertigen 10 in einer Prozesskammer 13 angeordnet.

Weiterhin umfasst die Vorrichtung zum Schweißen oder generativen Fertigen 10 eine Schweißeinrichtung 14 mit einem Roboter 15 und einem Schweißbrenner 16.

Zudem ist eine Gaszuführeinrichtung 17 zum Einbringen und Bereitstellen von Schutzgas vorgesehen.

Ein drahtförmiges Ausgangsmaterial 18 wird mittels einer Drahtzuführeinrichtung 19 bereitgestellt.

Weiterhin kann auch eine Einrichtung zum Zuführen eines Prozessgases 20 vorgesehen sein.

Zudem weist die Vorrichtung zum Schweißen oder generativen Fertigen 10 eine Steuereinrichtung 21 auf.

Optional kann an einer Mantelwandung der Düseneinrichtung eine Heizeinrichtung vorgesehen sein, um ein Festkleben von Trockeneispartikeln und damit ein Verstopfen der Düse zu vermeiden. Diese Heizung kann bspw. durch eine elektrische Heizung mit Widerstandsdraht realisiert sein.

Ein Abstand zwischen der Schweißeinrichtung 14 und der Düse 4 der Vorrichtung 1 zum Kühlen von Bauteilen mittels eines CO₂-Partikelstrahls kann zwischen 2 cm und 40 cm und vorzugsweise zwischen 2 cm und 20 cm betragen und vorzugsweise in etwa 10 cm betragen.

Zusätzlich und/oder alternativ kann auch vorgesehen sein, dass die Düse 4 der Vorrichtung 1 zum Kühlen von Bauteilen mittels eines CO₂-Partikelstrahls derart ausgebildet ist, dass sie die Schweißeinrichtung 14 konzentrisch umgibt.

Im Folgenden wird ein erfindungsgemäßes Verfahren zum Kühlen einer Bauteiloberfläche mittels CO₂-Partikeln beschrieben.

Gemäß dem Verfahren zum Kühlen einer mit einer Vorrichtung 1 zum Kühlen von Bauteilen mittels eines CO₂-Partikelstrahls ist vorgesehen über einen Zuführkanal 5 flüssiges CO₂ einer Düseneinrichtung zuzuführen und das CO₂ in einem Expansionsabschnitt 7 der Düseneirichtung zu expandieren und dabei zu CO₂-Partikeln und gasförmigem CO₂ umzuwandeln, wobei ein Volumenstrom einer Absaugeinrichtung 8 derart ausgebildet ist, dass ein Großteil der entstandenen Gasphase im Expansionsabschnitt 7 abgesaugt wird.

Somit wird zunächst in einem Bereich einer Bauteiloberfläche geschweißt oder generativ gefertigt, wobei dieser Bereich anschließend mittels der Vorrichtung 1 gekühlt wird.

### Bezugszeichenliste:

- 1: Vorrichtung
- 2: Düsenkörper
- 3: Ausgaberichtung
- 4: Düse
- 5: Zuführkanal
- 6: Zuführdüse
- 7: Expansionsabschnitt
- 8: Absaugeinrichtung
- 9: Führungseinrichtung
- 10: Vorrichtung zum generativen Fertigen
- 11: Bauplattform
- 12: Substrat
- 13: Prozesskammer
- 14: Schweißeinrichtung
- 15: Roboter
- 16: Schweißbrenner
- 17: Gaszuführeinrichtung
- 18: Ausgangsmaterial
- 19: Drahtzuführeinrichtung
- 20: Einrichtung zum Zuführen von Prozessgas
- 21: Steuereinrichtung

## Patentansprüche

1. Vorrichtung (1) zum Kühlen von 143Bauteilen mittels eines CO₂-Partikelstrahls, umfassend
einen Zuführkanal (5) zum Zuführen von flüssigem CO₂,
einen Expansionsabschnitt (7) zum Erzeugen von CO₂-Partikeln aus dem flüssigem CO₂, wobei das CO₂ im Expansionsabschnitt (7) expandiert und dabei zu CO₂-Partikeln und gasförmigem CO₂ umgewandelt wird und
einer Düse (4) zum Ausgeben der CO₂-Partikel in einer Strömungsrichtung, **dadurch gekennzeichnet,**
**dass** eine Absaugeinrichtung (8) vorgesehen ist, wobei ein Volumenstrom der Absaugeinrichtung (8) ausgebildet ist, um einen Großteil der entstandenen CO₂-Gasphase im Expansionsabschnitt (7), im Wesentlichen entgegen der Strömungsrichtung der CO₂-Partikel, abzusaugen.

2. Vorrichtung (1) gemäß Anspruch 1,
**dadurch gekennzeichnet,**
**dass** die Vorrichtung (1) eine Düseneinrichtung mit einem Düsenkörper (2) und einer Düse (4) ist, wobei der Düsenkörper (2) in etwa rohrförmig ausgebildet ist und ein in einer Ausgaberichtung (3) vorne liegender Bereich des Düsenkörpers (2) die Düse (4) ausbildet und ein in Ausgaberichtung (3) hinten liegender Bereich mit der Absaugeinrichtung (8) verbunden ist, wobei die Absaugeinrichtung (8) eine Einrichtung zum Erzeugen eines Unterdrucks ist deren Saugleistung vorzugsweise regelbar ist.

3. Vorrichtung (1) gemäß Anspruch 1 oder 2,
**dadurch gekennzeichnet,**
**dass** die Absaugeinrichtung (8) als eine Einrichtung zum Erzeugen eines Unterdrucks ausgebildet ist, wobei deren Saugleistung bzw. deren Volumenstrom zum Absaugen mittels einer entsprechenden Steuereinrichtung (21) steuer- bzw. regelbar ist.

4. Vorrichtung (1) gemäß Anspruch 2 oder 3,
**dadurch gekennzeichnet,**
**dass** optional an der Düseneinrichtung eine Heizeinrichtung vorgesehen ist.

5. Vorrichtung (1) gemäß einem der Ansprüche 1 bis 4,
**dadurch gekennzeichnet,**
**dass** der Volumenstrom der Absaugeinrichtung (8) derart ausgebildet ist, dass der Großteil der Gasphase, wobei der Großteil der Gasphase in etwa 65 Vol.-% bis 98 Vol.-% bzw. in etwa 75 Vol.-% bis 90 Vol.-% und vorzugsweise in etwa 80 Vol.-% beträgt, in etwa zum Zeitpunkt ihrer Entstehung im Expansionsabschnitt (7) derart abgesaugt wird bevor es zur zusätzlichen Beschleunigung der CO₂-Partikel kommt, d.h. der Volumenstrom der Absaugeinrichtung (8) ist kleiner oder gleich dem Volumenstrom der entstehenden Gasphase.

6. Vorrichtung zum Schweißen oder generativen Fertigen (10) umfassend,
eine Einrichtung zum Schutzgasschweißen (14), und
eine Vorrichtung (1) gemäß einem der Ansprüche 1 bis 5, wobei die Vorrichtung (1) zum Kühlen von Bauteilen mittels eines CO₂-Partikelstrahls eine Führungseinrichtung (9) zum Verfahren aufweist oder wobei die Vorrichtung (1) zum Kühlen von Bauteilen mittels eines CO₂-Partikelstrahls mit der Vorrichtung (10) zum Schweißen derart verbunden ist, dass beide Vorrichtungen (1, 10) synchron verfahrbar sind.

7. Vorrichtung (10) gemäß Anspruch 6,
**dadurch gekennzeichnet,**
**dass** die Einrichtung zum Schutzgasschweißen (14) als eine Einrichtung zum Gasschmelzschweißen oder zum Lichtbogenschweißen oder zum Laserstrahlschweißen oder als Lasereinrichtung oder Lichtbogeneinrichtung zum generativen Fertigen mittels Schutzgas ausgebildet ist.

8. Verfahren zum Kühlen einer Bauteiloberfläche mittels CO₂-Partikeln, insbesondere mit einer Vorrichtung (1) gemäß einem der Ansprüche 1 bis 7, wobei
über einen Zuführkanal (5) flüssiges CO₂ einer Düseneinrichtung zugeführt wird und das CO₂ in einem Expansionsabschnitt (7) der Düseneirichtung expandiert und dabei zu CO₂-Partikeln und gasförmigem CO₂ umgewandelt wird und, wobei ein Volumenstrom einer Absaugeinrichtung (8) derart ausgebildet ist, um einen Großteil der entstandenen Gasphase im Expansionsabschnitt (7) abzusaugen.

9. Verfahren gemäß Anspruch 8,
**dadurch gekennzeichnet,**
**dass** der Volumenstrom der Absaugeinrichtung (8) in etwa dem Volumenstrom der Gasphase entspricht, sodass die Gasphase in etwa zum Zeitpunkt ihrer Entstehung im Expansionsabschnitt (7) abgesaugt wird, sodass nahezu alles Gas abgesaugt wird, bevor es zur zusätzlichen Beschleunigung der CO₂-Partikel kommt, d.h. der Volumenstrom der Absaugeinrichtung (8) ist kleiner oder gleich dem Volumenstrom der entstehenden Gasphase.

10. Verfahren gemäß Anspruch 8 oder 9,
**dadurch gekennzeichnet,**
**dass** zunächst in einem Bereich einer Bauteiloberfläche geschweißt oder generativ gefertigt wird dieser anschließend gekühlt wird und/oder dass zunächst gekühlt wird und danach geschweißt oder generativ gefertigt wird.
